# NEW EUROPEAN PATENT SPECIFICATION

(11) **EP 2 689 983 B2**
(45) Date of publication and mention of the opposition decision: **26.07.2023**
(45) Mention of the grant of the patent: 06.01.2016
(21) Application number: 13177319.4
(22) Date of filing: 19.07.2013
(51) Int. Cl.: B61C 7/04, B60L 11/02

(54) **Drive system and railway vehicle provided with the drive system**
Antriebssystem und Schienenfahrzeug mit dem Antriebssystem
Système d'entraînement et véhicule ferroviaire équipé du système d'entraînement

(30) Priority: 27.07.2012 JP 2012166491
(43) Date of publication of application: 29.01.2014
(73) Proprietor: Hitachi, Ltd., Tokyo 100-8280 (JP)
(72) Inventor: Mochizuki, Kento, Chiyoda-ku, Tokyo 100-8280 (JP); Inarida, Satoru, Chiyoda-ku, Tokyo 100-8280 (JP); Agatsuma, Koji, Chiyoda-ku, Tokyo 100-8280 (JP)
(74) Representative: Mewburn Ellis LLP

(56) References cited:
- EP-A1- 2 444 272
- DE-A1-102009 008 549
- JP-A- H09 168 204
- RU-C1- 2 422 299
- Power point presentation 'Doppelte Power fur Amerika'
- Magazine ZEVrail, Sonderheft Tagungsband 'Moderne Schienenfahrzeuge' , pages 1-7, 96-107

## Description

### BACKGROUND OF THE INVENTION

### Field of the Invention

The present invention relates to a railway vehicle that obtains power from a plurality of different power sources.

### Description of the Related Art

A railway includes two types of routes: a route provided with a facility that supplies power to a train from the ground through a trolley wire or a third rail (hereinafter, called "electrified route"); and a route without a power supply facility from the ground, in which power generation means included in the train obtains power (or motive power is obtained from a motive power source) (hereinafter, called "non-electrified route"). In the electrified route, regenerative electric power generated during braking of the train can be consumed by another train. Therefore, the energy efficiency is generally higher in the electrified system, and there is a tendency to preferentially electrify routes with a greater number of trains. Recently, a plan for electrifying non-electrified routes is developed on the background of the rise in the energy price.

Meanwhile, a train that can travel regardless of whether the route is electrified or non-electrified is desirable to efficiently operate the train. An example of widely used means for realizing such a train includes a system of pulling a train formation including vehicles without electric power sources/motive power sources by an electric locomotive in the electrified route and pulling the train formation by a diesel locomotive including an internal combustion engine as a motive power source in the non-electrified route.

Regardless of whether the locomotive is an electric locomotive or a diesel locomotive, a locomotive is provided with a large number of apparatuses, and the weight of the locomotive is usually several times higher than the weight of a passenger car constituting the train. For example, compared to a power-dispersed train, such as a Shinkansen train travelling in Japan, in which a drive device and other functions necessary for the train are dispersed, the locomotive has a problem that the track is significantly damaged by a heavy axle or has a problem that there is a limit to speeding up the train because a large-capacity brake device is necessary for a vehicle with concentrated weight.

On the other hand, a function-dispersed train needs to have the functions optimized for each of the electrified route and the non-electrified route, and there is a problem that the functions cannot be shared.

To solve the problems, EP 1 186497 A1, Railway vehicle with power supply system, ALSTOM, LHB GmbH provides a railway vehicle drive device and means for realizing a railway vehicle using the railway vehicle drive device, the device including: power generation means based on an overhead contact line voltage or a diesel engine (and fuel cells/gas cells), that is, different power sources (FIG. 1: 11, 12, 21, and 31 in EP 1 186497 A1, Railway vehicle with power supply system, ALSTOM, LHB GmbH); and power converters that convert power obtained from the power sources to DC voltages to change the power to DC voltages (FIG. 1: 13, 20, and 32 in EP 1 186497 A1, Railway vehicle with power supply system, ALSTOM, LHB GmbH), wherein the problems can be solved by appropriately switching the power sources and the power converters according to the travelling route.

However, in EP 1 186497 A1, Railway vehicle with power supply system, ALSTOM, LHB GmbH, each power source (overhead contact line, power generator driven by engine, and fuel cells) needs an appropriate power converter (FIG. 1: 13, 25, and 32 in EP 1 186497 A1, Railway vehicle with power supply system, ALSTOM, LHB GmbH) that converts the voltage of the power source to a DC voltage (FIG. 1: 1 in EP 1 186497 A1, Railway vehicle with power supply system, ALSTOM, LHB GmbH). Therefore, there are problems of an increase in the weight of the formation of the train, a reduction in the degree of freedom of the train formation because the mounting space needs to be reserved, an increase in the maintenance cost, a reduction in the reliability caused by an increase in the number of components, and the like. The number of apparatuses is large, and the apparatuses cannot be housed in one vehicle. Therefore, the apparatuses need to be dispersed to a plurality of vehicles, and there is a problem that the freedom of formation is obstructed.

An example of means for solving the problems includes a drive system, in which control is performed to convert AC voltages from the power sources (overhead contact line, power generator driven by engine, and the like) to DC voltages according to the AC voltages of the power sources to thereby standardize converters for a plurality of power sources. However, in the drive system, physical circuits as well as the control of the converters need to be switched when the train enters the non-electrified route from the electrified route and when the train enters the electrified route from the non-electrified route. There is a problem that the changeover is more complicated than in EP 1 186497 A1, Railway vehicle with power supply system, ALSTOM, LHB GmbH.

In this way, there is a problem that realization of stable drive while ensuring the safety of the device is difficult, when the physical circuits and the control of the converters are switched. If an attempt is made to ensure the safety of the device or to stabilize the drive, there is a problem that a long time is required for the changeover. If a long time is required for the changeover, the time that the formation cannot be accelerated is long. Therefore, an operation schedule needs to be formed by considering the time that the acceleration is not possible, and there is a problem that the degree of freedom in the operation is reduced. The time that the supply of power to auxiliary apparatuses in the vehicle, such as an air conditioner and a lighting device, is cut off is long, and there is a problem that the service for the passengers is degraded.

An object of the present invention is to realize stable drive while ensuring safety of a device when power sources are changed over in a drive system including converters standardized for a plurality of power sources. Another object of the present invention is to quickly perform the changeover.

EP 2444272 proposes a railroad vehicle system provided with an overall control apparatus to respectively control an external electric power supply means, an internal electric power supply means including an electricty generator, an electricity storage means, electric power conversion means and a motor driving means. The power conversion includes a first AC/DC converter circuit to convert the AC power supplied from a main transformer of the external electric power supply to DC, and it includes a separate, second AC/DC converter circuit to convert the three-phase AC power supplied from the electricity generator to DC. The DC power supplied by these converter circuits is then converted by an inverter apparatus to three-phase power to drive motors of the motor driving means.

### SUMMARY OF THE INVENTION

Provided as means for addressing the problems is a railway vehicle according to claim 1.

The present invention can realize stable drive while ensuring safety of a device when power sources are changed over in a drive system including converters standardized for a plurality of power sources. The present invention can also quickly perform the changeover.

### BRIEF DESCRIPTION OF THE DRAWINGS

FIG. 1 is a drive system diagram showing an embodiment of the present invention;
FIG. 2 is a diagram showing a configuration example when a drive system of the present invention is mounted on a train;
FIG. 3 is a diagram showing a changeover flow when the train enters a non-electrified route from an electrified route;
FIG. 4 is a diagram showing a changeover flow when the train enters an electrified route from a non-electrified route;
FIG. 5 is another drive system diagram showing an embodiment of the present invention; and
FIG. 6 is another drive system diagram showing an embodiment of the present invention.

### DETAILED DESCRIPTION OF THE PREFERRED EMBODIMENTS

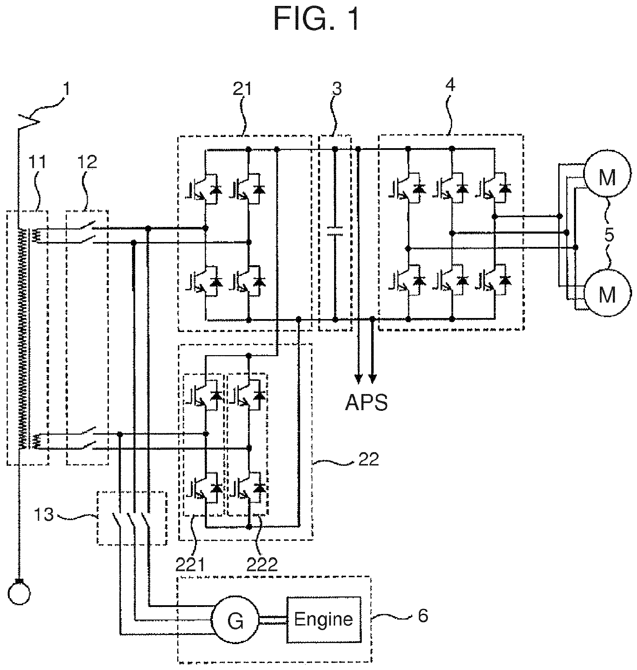

Embodiments of the present invention will now be described with reference to the drawings. An example of a drive system for railway vehicle of the present invention and an example of application to a railway vehicle formation will be described with reference to FIGS. 1 to 6.

### [First Embodiment]

As shown in FIG. 1, a drive system of the present embodiment includes: a power collector 1 that receives single-phase AC power from an overhead contact line (not shown) connected to a substation that is a single-phase AC power supply; and a main transformer 11 that steps down an overhead contact line voltage. Two wires are arranged on the low pressure side of the main transformer 11, and a single-phase alternating current is supplied to each wire. The drive system is a drive system for railway vehicle including a power conversion circuit 21 for power supply and a power conversion circuit 22 for power supply, each including two phases of switch circuits and converting AC power to DC power, the switching circuits formed by connecting two connectors in series, the connectors including semiconductor elements (for example, IGBT) with self-extinction capability and diodes connected in antiparallel. The drive system further includes: a contactor 12 connected between the main transformer 11 and the power conversion circuits 21 and 22 for power supply; a smoothing capacitor 3 that is connected to the DC side of the power conversion circuits 21 and 22 for power supply and that smoothes a DC voltage; a conversion circuit 4 for driving electric motor that includes a combination of semiconductor elements and that drives a main electric motor 5 by using the voltage at both ends of the smoothing capacitor 3 as a voltage source; a power generation unit 6 that includes an engine and a power generator connected to the engine and that supplies a three-phase AC power supply; connection points of the main transformer 11 and the power conversion circuits 21 and 22 for power supply (AC sides of the power conversion circuits 21 and 22 for power supply); and a contactor 13 connected to a three-phase AC output of the power generation unit 6.

In the example of FIG. 1, when the train travels under an overhead contact line, that is, in an electrified route, the contactor 12 is closed, and the contactor 13 is opened. The main transformer 11 supplies single-phase AC power to the power conversion circuits 21 and 22 for power supply. Therefore, the semiconductor elements constituting the power conversion circuits 21 and 22 for power supply are appropriately switched to convert a single-phase alternating current to a direct current. In this way, the power conversion circuits 21 and 22 for power supply convert a single-phase AC voltage supplied from the overhead contact line to obtain a DC voltage, and the conversion circuit 4 for driving electric motor drives the main electric motor 5.

On the other hand, when the train travels a route without an overhead contact line, that is, in a non-electrified route, the contactor 12 is opened, and the contactor 13 is closed. Two phases of the three-phase alternating current supplied from the power generation unit 6 are connected to the AC side of the power conversion circuit 21 for power supply, and the remaining one phase is connected to the semiconductor element constituting one phase 221 of the power conversion circuits for two phases constituting the power conversion circuit 22 for power supply. The semiconductor elements constituting the one phase 221 of the power conversion circuit 22 for power supply and the power conversion circuits of the two phases of the power conversion circuit 21 for power supply are appropriately switched to convert the three-phase alternating current to a direct current, and the three-phase AC output voltage of the power generation unit 6 is converted to a DC voltage. To prevent unnecessary switching, an off command is provided to the semiconductor elements constituting one phase 222 of the power conversion circuit 22 for power supply that is not switched. The advantageous effects of the present invention can be attained by performing the control described above when the vehicle is travelling under the overhead contact line (electrified route) and the overhead contact line is in an abnormal state.

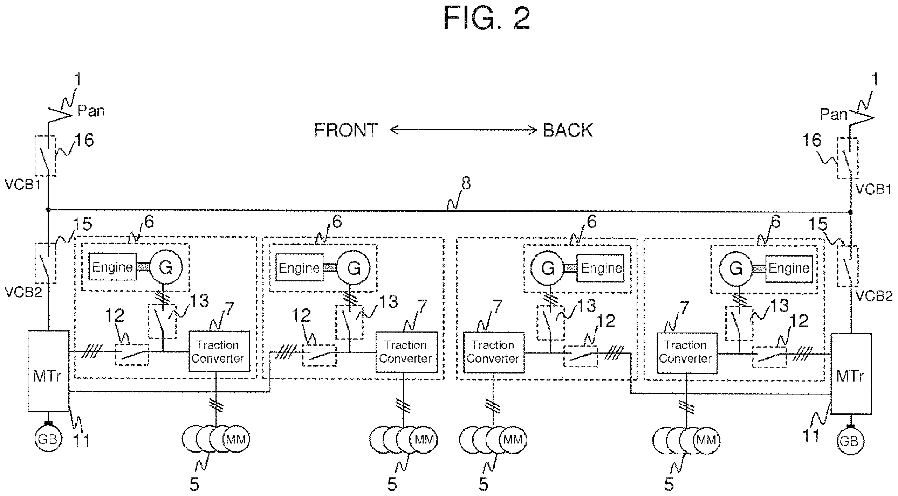

FIG. 2 shows a configuration diagram when the drive system shown in FIG. 1 is mounted on a formation train. FIG. 2 shows an example that four drive systems shown in FIG. 1 are mounted on a plurality of vehicles. In this example, the power collector 1 and the main transformer 11 are mounted on the first and last vehicles, and front two drive systems receive single-phase alternating currents (from two wires) from the main transformer 11 mounted on the first vehicle. Back two drive systems receive single-phase alternating currents (from two wires) from the main transformer 11 mounted on the last vehicle. A power conversion device 7 in FIG. 2 indicates the power conversion circuits 21 and 22 for power supply, the DC filter capacitor 3, and the conversion circuit 4 for driving electric motor in FIG. 1.

The front power collector 1 and the back power collector 1 are connected by a power line 8. The main transformer 11 of the first vehicle and the main transformer 11 of the last vehicle can receive power from any of the front power collector 1 and the back power collector 1. Even if there is an abnormality in one of the power collectors 1, the power line 8 allows receiving power from the other power collector 1, and the operation can be continued.

In the present embodiment, the power conversion circuits 21 and 22 for power supply are standardized for the overhead contact line and the power generator, and the control mode of the contactors 12, 13, 15, and 16 and the power conversion circuits 21 and 22 for power supply is properly changed according to whether the travelling position is in an electrified route or in a non-electrified route. As a result, the train can safely travel the electrified route and the non-electrified route, and the changeover of the drive system can be smoothly performed.

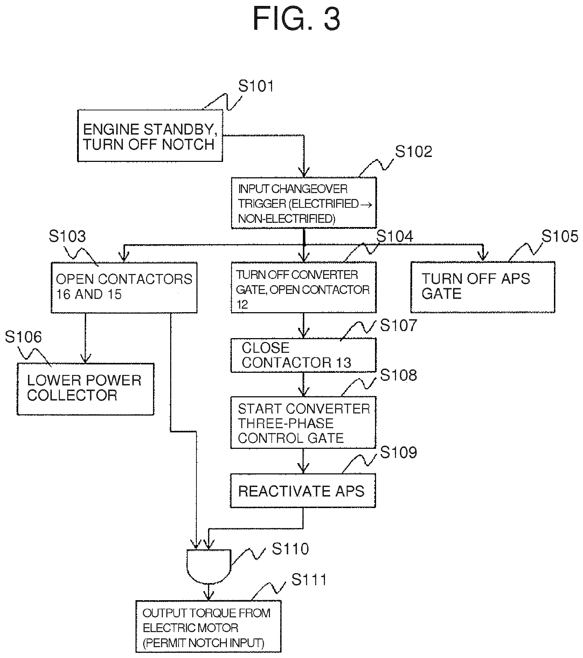

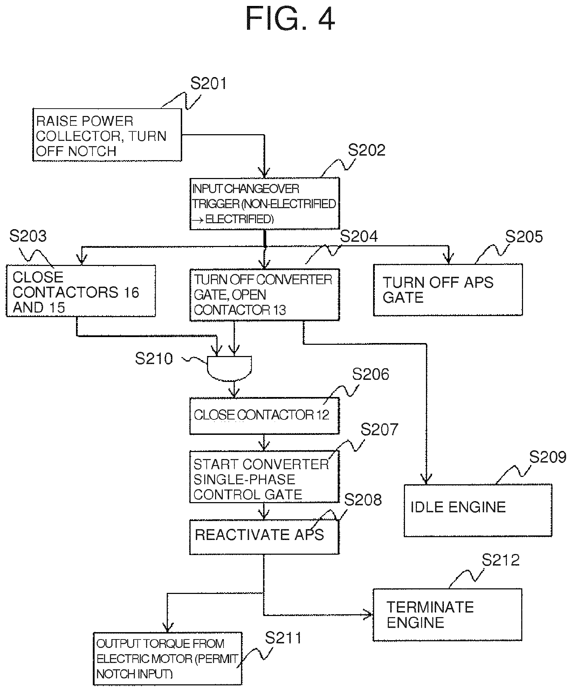

A changeover sequence of the drive system will be described in detail with reference to FIGS. 3 and 4. FIG. 3 is a changeover flow when the train enters a non-electrified route from an electrified route. In step 101, the facts that the engine is idled, power can be generated, and a notch command from the driver's cab is off are checked, and the process moves to step 102. The drive system may automatically execute the checking process in step 101. Alternatively, the checking status may be displayed in the driver's cab, and the driver may perform the check.

In step 102, a trigger for switching from drive control for electrified route to drive control for non-electrified route is input. The trigger is automatically input by detecting that the train is in a predetermined route for switching from the drive control for electrified route to the drive control for non-electrified route. Alternatively, the driver inputs the trigger. Whether the train is in the predetermined route may be determined from a detection result of the power collector voltage. Alternatively, whether the train is in the predetermined route may be determined from a result of comparison between a travelling position of the train generated by a tacho-generator or GPS and position information of the predetermined route stored in advance. Whether the train is in the predetermined route can also be determined by receiving information of electrified/non-electrified route from a facility on the ground such as a ground member.

When the changeover trigger is input in step 102, the process moves to steps 103, 104, and 105. In step 103, the contactor 16 and the contactor 15 are opened to cut off the connection between the power collector 1 and the main transformer 11. The process moves to step 106. In step 106, the power collector 1 is lowered and housed.

In step 105, the gates of the switching elements of all auxiliary power supplies (APS) in the formation that supply power to the auxiliary apparatuses, such as air conditioners and lighting devices, in the vehicles are turned off to terminate the switching operation.

In step 104, the gates of the switching elements of all power conversion circuits 21 and 22 for power supply (converters) in the formation are turned off to terminate the switching operation. The contactor 12 is opened to cut off the connection between the main transformer 11 and the power conversion circuits 21 and 22 for power supply. The contactor 13 is open when the train travels on the electrified route. Therefore, all power conversion circuits 21 and 22 for power supply in the formation are cut off from the power sources. The process moves to step 107.

In step 107, the contactor 13 is closed to connect the power generator and the power conversion circuits 21 and 22 for power supply. In this way, the contactor 13 is closed after opening the contactor 12, and application of a large voltage caused by connection of the main transformer 11 and the power generator can be prevented. The process moves to step 108.

In step 108, the switching operation of all power conversion circuits 21 and 22 for power supply (converters) in the formation is started. As described, the switching operation of the power conversion circuits 21 and 22 for power supply (converters) is an operation of appropriately switching the semiconductor elements constituting the one phase 221 of the power conversion circuit 22 for power supply and the power conversion circuits of the two phases of the power conversion circuit 21 for power supply to convert the three-phase alternating current to a direction current to thereby convert the three-phase AC output voltage of the power generation unit 6 to a DC voltage. To prevent unnecessary switching, an off command is provided to the semiconductor elements constituting the one phase 222 not connected to the power generator of the power conversion circuit 22 for power supply. The process moves to step 109.

In step 109, the switching operation of all auxiliary power supplies (APS) in the formation is restarted to start supplying power to the auxiliary apparatuses.

In step 110, if AND conditions that the contactor 16 and the contactor 15 are opened in step 103 and that all auxiliary power supplies (APS) in the formation have restarted the switching operation in step 109 are satisfied, the process moves to step 111. Although the restart of the switching operation by all auxiliary power supplies (APS) in the formation is one of the AND conditions of step 110 in FIG. 3, the start of the switching operation by all converters in the formation in step 108 may be one of the AND conditions in place of step 109.

In step 111, on the condition that the AND conditions of step 110 are satisfied, the operation of the conversion circuit 4 for driving electric motor is started according to a notch input from the driver's cab, and torque output from the main electric motor 5 is permitted. In other words, if the AND conditions are not satisfied in step 110, the torque output from the main electric motor 5 is prohibited.

Although all of steps 101 to 111 have been described in FIG. 3, the minimum requirements for generating the advantageous effects of the present invention are steps 102, 103, 104, 107, 108, and 111. More specifically, the changeover trigger is input (S102). The gates of all converters in the formation are turned off, and the connection between the converters and the overhead contact line is cut off (S104). All converters in the formation are connected to the power generator to start the gates of the converters (S107 and S108). The torque output from the main electric motor is permitted (S111).

The converters and the power generator are connected after turning off the gates of all converters in the formation and cutting off the connection between the converters and the overhead contact line. This can prevent connection of the overhead contact line with the power generator and application of an excessive voltage to the power generator and the like. The torque output from the main electric motor is permitted after all converters in the formation have started the switching operation for non-electrified route. Therefore, the torque output is permitted when the input voltage of the conversion circuit 4 for driving electric motor is reserved, and stable drive output is possible. As a result, the semiconductor elements constituting the power conversion circuit that generates DC power can be standardized for the power supplies, and stable drive can be realized while ensuring the safety. These advantageous effects of the present invention can be attained.

Inclusion of step 110 in addition to the minimum requirements allows parallel execution of step 103 and steps 104, 107 to 109. Therefore, the changeover can be quickly performed even when a disconnection process of the power collector and the main transformer is executed. Inclusion of step 105 allows parallel execution of step 105 and steps 104, 107 to 109. Therefore, the changeover can be quickly performed.

A changeover flow when the train enters an electrified route from a non-electrified route will be described with reference to FIG. 4. In step 201, the facts that the power collector 1 is raised, power can be received from the overhead contact line, and a notch command from the driver's cab is off are checked, and the process moves to step 202. The drive system may automatically execute the checking process in step 201. Alternatively, the checking status may be displayed in the driver's cab, and the driver may perform the check.

In step 202, a trigger for switching from drive control for non-electrified route to drive control for electrified route is input. The trigger is automatically input by detecting that the train is in a predetermined route for switching from the drive control for non-electrified route to the drive control for electrified route. Alternatively, the driver inputs the trigger. Whether the train is in the predetermined route may be determined from a detection result of the power collector voltage. Alternatively, whether the train is in the predetermined route may be determined from a result of comparison between a travelling position of the train generated by a tacho-generator or GPS and position information of the predetermined route stored in advance. Whether the train is in the predetermined route can also be determined by receiving information of electrified/non-electrified route from a facility on the ground such as a ground member.

When the changeover trigger is input in step 202, the process moves to steps 203, 204, and 205. In step 203, the contactor 16 and the contactor 15 are closed to connect the power collector 1 and the main transformer 11.

In step 205, the gates of the switching elements of all auxiliary power supplies (APS) in the formation are turned off to terminate the switching operation.

In step 204, the gates of the switching elements of all power conversion circuits 21 and 22 for power supply (converters) in the formation are turned off to terminate the switching operation. The contactor 13 is opened to cut off the connection between the power generator and the power conversion circuits 21 and 22 for power supply. The contactor 12 is open when the train travels on the non-electrified route. Therefore, all power conversion circuits 21 and 22 for power supply in the formation are cut off from the power sources. The process moves to steps 206 and 209.

In step 210, if AND conditions that the contactor 16 and the contactor 15 are opened in step 203 and that the switching operation of the converters are terminated to open the contactor 13 in step 204 are satisfied, the process moves to step 206. In step 206, the contactor 12 is closed to connect the main transformer 11 and the power conversion circuits 21 and 22 for power supply. In this way, the contactor 12 is closed after opening the contactor 13, and application of a large voltage caused by connection of the main transformer 11 and the power generator can be prevented. The process moves to step 207. The contactor 12 includes a resistor (not shown) that prevents a rush current, and the contactor 12 needs to be closed after closing the contactors 15 and 16 to prevent a flow of a rush current in the DC filter capacitor shown in FIG. 1 when the overhead contact line and the converter 7 are connected.

In step 207, the switching operation of all power conversion circuits 21 and 22 for power supply (converters) in the formation is started. The main transformer 11 supplies single-phase AC power to the power conversion circuits 21 and 22 for power supply. Therefore, the switching operation of the power conversion circuits 21 and 22 for power supply (converters) is an operation of converting the single-phase alternating current to a direct current by the semiconductor elements constituting the power conversion circuits 21 and 22 for power supply. As a result, the power conversion circuits 21 and 22 for power supply convert the single-phase AC voltage supplied from the overhead contact line to a DC voltage. The process moves to step 109.

In step 208, the switching operation of all auxiliary power supplies (APS) in the formation is restarted to start supplying power to the auxiliary apparatuses. The process moves to steps 211 and 212.

The engine is idled in step 209. In this way, the gates of the converters are turned off to cut off the connection between the power generator and the converters in step 204, and then the engine is idled. This can prevent a situation that the converters cannot obtain desired power from the power generator, and stable control is possible.

In FIG. 4, the restart of the switching operation by all auxiliary power supplies (APS) in the formation is the condition for movement to steps 211 and 212. However, in place of step 208, the start of the switching operation by all converters in the formation in step 207 may be the condition for movement to steps 211 and 212.

In step 211, on the condition that the AND conditions of step 210 are satisfied, the operation of the conversion circuit 4 for driving electric motor is started according to a notch input from the driver's cab, and torque output from the main electric motor 5 is permitted. In other words, if the AND conditions are not satisfied in step 210, the torque output from the main electric motor 5 is prohibited.

In step 212, the engine is terminated on the condition that step 208 is satisfied. The engine is activated (idled) before the satisfaction of step 208 or 207, and the engine is terminated after the satisfaction of step 208 or 207. In this way, there is an advantageous effect of a quick shift to the drive system for non-electrified route by the engine when the changeover to the drive system for electrified route is not attained due to an abnormality.

Although all of steps 201 to 212 have been described in FIG. 4, the minimum requirements for generating the advantageous effects of the present invention are steps 202, 204, 206, 207, and 211. More specifically, the changeover trigger is input (S202). The gates of all converters in the formation are turned off, and the connection between the converters and the power generator is cut off (S204). All converters in the formation are connected to the overhead contact line to start the gates of the converters (S206 and S207). The torque output from the main electric motor is permitted (S211).

The converters and the overhead contact line are connected after turning off the gates of all converters in the formation and cutting off the connection between the converters and the power generator. This can prevent connection of the overhead contact line with the power generator and application of an excessive voltage to the power generator and the like. The torque output from the main electric motor is permitted after all converters in the formation have started the switching operation for electrified route. Therefore, the torque output is permitted when the input voltage of the conversion circuit 4 for driving electric motor is reserved, and stable drive control is possible. As a result, the semiconductor elements constituting the power conversion circuit that generates DC power can be standardized for the power supplies, and stable drive can be realized while ensuring the safety. These advantageous effects of the present invention can be attained.

Inclusion of steps 203 and 210 in addition to the minimum requirements allows parallel execution of step 203 and steps 204, 205. Therefore, the changeover can be quickly performed even when a connection process of the power collector and the main transformer is executed. Inclusion of step 205 allows parallel execution of step 205 and steps 204, 206 to 208. Therefore, the changeover can be quickly performed. In FIG. 4, step 210 of taking the AND conditions of steps 203 and 204 is arranged before step 206. However, if a measure for preventing a rush current to the DC filter capacitor is taken, the condition for movement to step 206 may be the completion of step 204, and the conditions for movement to steps 211 and 212 may be AND conditions of the completions of steps 203 and 208.

### [Second Embodiment]

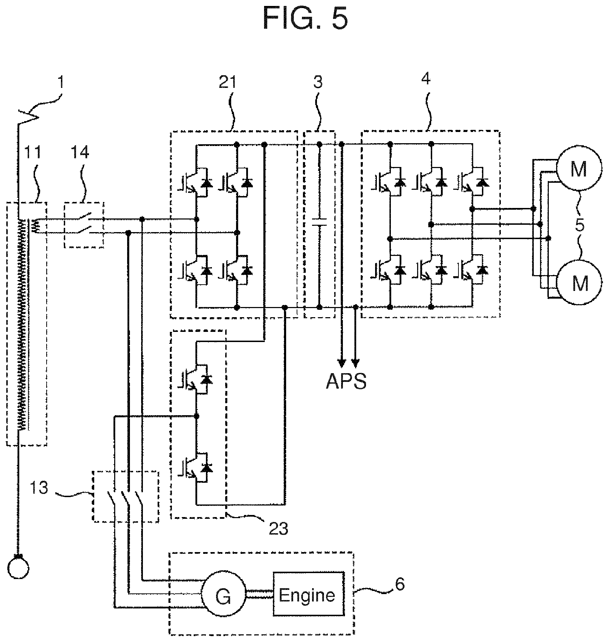

Another embodiment will be described with reference to FIG. 5. The present embodiment illustrates an example when one converter is connected to one wire on the low pressure side of the main transformer 11. In the present embodiment, the power conversion circuit 21 for power supply is connected to one wire on the low pressure side of the main transformer 11, and a contactor 14 is connected between the one wire on the low pressure side and the power conversion circuit 21 for power supply. More specifically, the contactor 14 for one phase (two phase) type is connected, in place of the contactor 12 in FIG. 1. A power conversion circuit 23 for power supply for one phase of the power conversion circuit is further included, in place of the power conversion circuit 22 for power supply in FIG. 1. More specifically, two phases of the three-phase alternating current supplied from the power generation unit 6 is connected to the AC side of the power conversion circuit 21 for power supply, and the remaining one phase is connected to the AC side of the power conversion circuit 23 for power supply. The other configuration of the drive system and the changeover flow are the same as in the first embodiment.

In the example of FIG. 5, the contactor 14 is closed, and the contactor 13 is opened under the overhead contact line, that is, in the electrified route. The overhead contact line serves as a power supply, and the semiconductor elements constituting the power conversion circuit 21 for power supply are appropriately switched to convert the single-phase alternating current to a direct current to obtain a DC voltage. The conversion circuit 4 for driving electric motor drives the main electric motor 5. In this case, an off command is provided to the semiconductor elements constituting the power conversion circuit 23 for power supply to prevent unnecessary switching.

On the other hand, the contactor 14 is opened, and the contactor 13 is closed in a route without the overhead contact line, that is, in the non-electrified route. The semiconductor elements constituting the power conversion circuit 21 for power supply and the power conversion circuit 23 for power supply for one phase are appropriately switched to convert the three-phase alternating current to a direct current, and the three-phase AC output of the power generation unit 6 is converted to a direct current.

### [Third Embodiment]

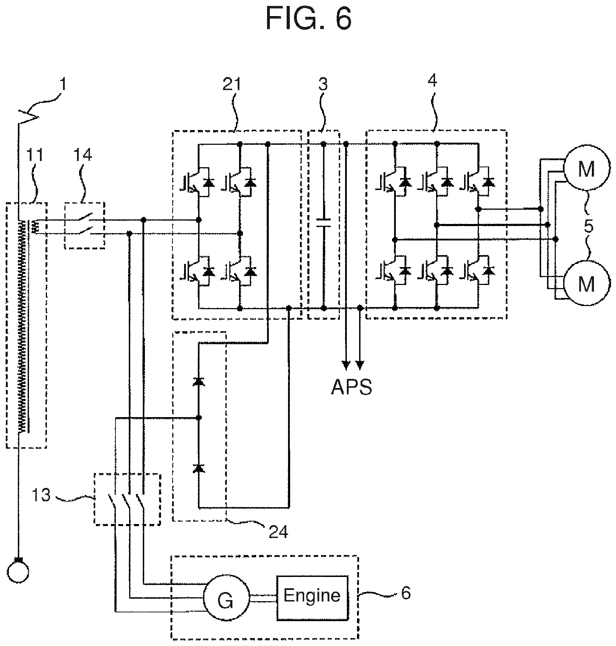

Another embodiment will be described with reference to FIG. 6. The present embodiment is an embodiment in which one converter is connected to one wire on the low pressure side of the main transformer 11, and a power conversion circuit 24 made of diodes is applied in place of the power conversion circuit 23 for one phase of the embodiment shown in FIG. 5. The other configuration of the drive system and the changeover flow of the power are the same as in the first and second embodiments.

In the example of the configuration diagram of FIG. 2 including the drive system of the embodiments mounted on the train, four drive systems are dispersed and mounted on four vehicles. However, the number of drive systems mounted on the train is not particularly limited. Passenger cars may be appropriately added between the vehicles provided with the drive systems according to the required traffic volume.

## Claims

1. A railway vehicle for travelling on a route with an overhead contact line and on a route without an overhead contact line, the vehicle being provided with a drive system comprising:
a first power conversion device (21, 22; 21, 23; 21, 24) that converts AC power to DC power; and
a second power conversion device (4) that drives an electric motor (5) by using the DC power converted by the first power conversion device as a power supply, wherein:
the first power conversion device is connected, through a first contactor (12; 14), to a first AC power supply that supplies a single-phase alternating current and connected, through a second contactor (13), to a second AC power supply (6) that supplies a three-phase alternating current,
the first power conversion device performs a power conversion operation according to the AC power supplies connected to the first and second contactors;
a power collector (1) that collects AC power from the first AC power supply; and
a transformer (11) connected to the power collector through a third contactor (15, 16) on a primary wire side and connected to the first power conversion device through the first contactor on a secondary wire side, the transformer stepping down the AC power from the first AC power supply to supply the AC power to the first power conversion device, wherein:
the drive system is configured, when an AC side of the first power conversion device is switched from the first AC power supply to the second AC power supply, to perform in sequential order:
a first step of terminating a switching operation of the first power conversion device to open the first contactor;
a second step of closing the second contactor to start a switching operation of converting the three-phase alternating current to a direct current by the first power conversion device;
a third step of permitting torque output from the electric motor; and
an opening operation of the third contactor is carried out in parallel with the first and second steps;
the third step being carried out on a condition that the second step and the opening of the third contactor are completed.

2. The railway vehicle according to claim 1, wherein
the power collector is movable to a storage position after opening the third contactor.

3. The railway vehicle according to claim 1 or 2, wherein the drive system further comprises
an auxiliary power supply (APS) that supplies power to an auxiliary apparatus in a vehicle by using the DC power output from the first power conversion device as a power supply, wherein
the drive system is configured such that, when the AC side of the first power conversion device is switched from the first AC power supply to the second AC power supply,
switching termination of the auxiliary power supply is carried out in parallel with the first and second steps.

4. The railway vehicle according to any one of claims 1 to 3, wherein the drive system is further configured, when the AC side of the first power conversion device is switched from the second AC power supply to the first AC power supply, to perform in sequential order:
a fourth step of terminating the switching operation of the first power conversion device to open the second contactor;
a fifth step of closing the first contactor to start a switching operation of converting the single-phase alternating current to a direct current by the first power conversion device; and
a sixth step of permitting torque output from the electric motor.

5. The railway vehicle according to claim 4, wherein
the drive system is configured such that, when the AC side of the first power conversion device is switched from the second AC power supply to the first AC power supply,
the fourth step is carried out in parallel with an operation of closing the third contactor, the fifth step is carried out on a condition that the fourth step and the operation of closing the third contactor are completed, and
the sixth step is carried out on a condition that the fifth step is completed.

6. The railway vehicle according to claim 4 or 5, wherein the drive system further comprises
an auxiliary power supply (APS) that uses, as a power supply, the DC power output from the first power conversion device to supply power to an auxiliary apparatus in a vehicle, wherein
the drive system is configured such that, when the AC side of the first power conversion device is switched from the second AC power supply to the first AC power supply,
switching termination of the auxiliary power supply is carried out in parallel with the first and second steps.

7. The railway vehicle according to any one of claims 1 to 6 wherein the drive system further comprises an engine.

8. The railway vehicle according claim 7, wherein the drive system further comprises a power generator (G) operated by the engine, the power generator supplying the three-phase alternating current of the second AC power supply.

9. The railway vehicle according to claim 7 or 8 as dependent on claim 4, wherein the drive system is configured such that
when the AC side of the first power conversion device is switched from the second AC power supply to the first AC power supply, the engine operation is terminated after the fifth step is carried out.

10. The railway vehicle according to claim 9, wherein the drive system is configured such that
when the AC side of the first power conversion device is switched from the second AC power supply to the first AC power supply, the engine is switched to an idling state after the fourth step is carried out.

11. The railway vehicle according to claim 7 or 8 as dependent on any of claims 4 to 6, wherein the drive system is configured such that
when the AC side of the first power conversion device is switched from the second AC power supply to the first AC power supply, the engine is switched to an idling state after the fourth step is carried out.

## Patentansprüche

1. Schienenfahrzeug zum Befahren einer Route mit einer Kontaktoberleitung und einer Route ohne eine Kontaktoberleitung, wobei das Fahrzeug mit einem Antriebssystem ausgestattet ist, das umfasst:
ein erstes Stromwandlungsgerät (21, 22; 21, 23; 21, 24), das Wechselstrom in Gleichstrom wandelt; und
ein zweites Stromwandlungsgerät (4), das einen Elektromotor (5) unter Verwendung des vom ersten Stromwandlungsgerät als einer Stromversorgung gewandelten Gleichstroms antreibt, wobei:
das erste Stromwandlungsgerät über einen ersten Schalter (12; 14) mit einer ersten Wechselstromversorgung, die einen Einphasenwechselstrom liefert, verbunden ist und über einen zweiten Schalter (13) mit einer zweiten Wechselstromversorgung (6), die einen Dreiphasenwechselstrom liefert, verbunden ist,
das erste Stromwandlungsgerät einen Stromwandlungsvorgang gemäß den mit dem ersten und dem zweiten Schalter verbundenen Wechselstromversorgungen ausführt,
einen Stromabnehmer (1), der Wechselstrom von der ersten Wechselstromversorgung abnimmt; und
einen Transformator (11), der über einen dritten Schalter (15, 16) auf einer primären Verdrahtungsseite mit dem Stromabnehmer verbunden ist und über den ersten Schalter auf einer sekundären Verdrahtungsseite mit dem ersten Stromwandlungsgerät verbunden ist, wobei der Transformator den Wechselstrom von der ersten Wechselstromversorgung abspannt, um den Wechselstrom dem ersten Stromwandlungsgerät zu liefern, wobei
das Antriebssystem dazu eingerichtet ist, wenn eine Wechselstromseite des ersten Stromwandlungsgeräts von der ersten Wechselstromversorgung auf die zweite Wechselstromversorgung umgeschaltet wird, Folgendes in dieser Reihenfolge auszuführen:
einen ersten Schritt, bei dem ein Schaltvorgang des ersten Stromwandlungsgeräts beendet wird, um den ersten Schalter zu öffnen;
einen zweiten Schritt, bei dem der zweite Schalter geschlossen wird, um einen Schaltvorgang zum Umwandeln des Dreiphasenwechselstroms in einen Gleichstrom durch das erste Stromwandlungsgerät zu beginnen;
einen dritten Schritt, bei dem Drehmomentausgabe vom Elektromotor zugelassen wird, wobei
ein Öffnungsvorgang des dritten Schalters parallel zu dem ersten und dem zweiten Schritt ausgeführt wird, und
der dritte Schritt unter einer Bedingung ausgeführt wird, dass der zweite Schritt und das Öffnen des dritten Schalters erledigt sind.

2. Schienenfahrzeug nach Anspruch 1, wobei
der Stromabnehmer nach dem Öffnen des dritten Schalters auf eine Speicherposition bewegt werden kann.

3. Schienenfahrzeug nach Anspruch 1 oder 2, wobei das Antriebssystem ferner umfasst:
eine Hilfsstromversorgung (APS), die Strom an eine Hilfsvorrichtung in einem Fahrzeug unter Verwendung der Gleichstromausgabe vom ersten Stromwandlungsgerät als einer Stromversorgung liefert, wobei
das Antriebssystem so eingerichtet ist, dass, wenn die Wechselstromseite des ersten Stromwandlungsgeräts von der ersten Wechselstromversorgung auf die zweite Wechselstromversorgung umgeschaltet wird,
eine Schaltungsbeendigung der Hilfsstromversorgung parallel zu dem ersten und dem zweiten Schritt ausgeführt wird.

4. Schienenfahrzeug nach einem der Ansprüche 1 bis 3, wobei das Antriebssystem ferner dazu eingerichtet ist, wenn die Wechselstromseite des ersten Stromwandlungsgeräts von der zweiten Stromversorgung auf die erste Stromversorgung umgeschaltet wird, in dieser Reihenfolge auszuführen:
einen vierten Schritt, bei dem der Schaltvorgang des ersten Stromwandlungsgeräts beendet wird, um den zweiten Schalter zu öffnen;
einen fünften Schritt, bei dem der erste Schalter geschlossen wird, um einen Schaltvorgang zum Wandeln des Einphasenwechselstroms in einen Gleichstrom durch das erste Stromwandlungsgerät zu beginnen; und
einen sechsten Schritt, bei dem eine Drehmomentausgabe vom Elektromotor zugelassen wird.

5. Schienenfahrzeug nach Anspruch 4, wobei
das Antriebssystem so eingerichtet ist, dass, wenn die Wechselstromseite des ersten Stromwandlungsgeräts von der zweiten Wechselstromversorgung auf die erste Wechselstromversorgung umgeschaltet wird,
der vierte Schritt parallel mit einem Schließvorgang des dritten Schalters ausgeführt wird, der fünfte Schritt unter einer Bedingung ausgeführt wird, dass der vierte Schritt und der Schließvorgang des dritten Schalters beendet sind, und
der sechste Schritt unter einer Bedingung ausgeführt wird, dass der fünfte Schritt beendet ist.

6. Schienenfahrzeug nach Anspruch 4 oder 5, wobei das Antriebssystem ferner umfasst:
eine Hilfsstromversorgung (APS), die als eine Stromversorgung die Gleichstromausgabe des ersten Stromwandlungsgeräts zum Liefern von Strom an eine Hilfsvorrichtung in einem Fahrzeug verwendet, wobei
das Antriebssystem so eingerichtet ist, dass, wenn die Wechselstromseite des ersten Stromwandlungsgeräts von der zweiten Wechselstromversorgung auf die erste Wechselstromversorgung umgeschaltet wird,
eine Schaltungsbeendigung der Hilfsstromversorgung parallel zu dem ersten und dem zweiten Schritt ausgeführt wird.

7. Schienenfahrzeug nach einem der Ansprüche 1 bis 6, wobei das Antriebssystem ferner eine Antriebsmaschine umfasst.

8. Schienenfahrzeug nach Anspruch 7, wobei das Antriebssystem ferner einen von der Antriebsmaschine betriebenen Stromgenerator (G) umfasst, wobei der Stromgenerator den Dreiphasenwechselstrom der zweiten Wechselstromversorgung liefert.

9. Schienenfahrzeug nach Anspruch 7 oder 8, wenn diese von Anspruch 4 abhängen, wobei das Antriebssystem so eingerichtet ist, dass,
wenn die Wechselstromseite des ersten Stromwandlungsgeräts von der zweiten Wechselstromversorgung auf die erste Wechselstromversorgung umgeschaltet wird, der Antriebsmaschinenvorgang beendet wird, nachdem der fünfte Schritt ausgeführt worden ist.

10. Schienenfahrzeug nach Anspruch 9, wobei das Antriebssystem so eingerichtet ist, dass,
wenn die Wechselstromseite des ersten Stromwandlungsgeräts von der zweiten Wechselstromversorgung auf die erste Wechselstromversorgung umgeschaltet wird, die Antriebsmaschine in einen Leerlaufzustand geschaltet wird, nachdem der vierte Schritt ausgeführt worden ist.

11. Schienenfahrzeug nach Anspruch 7 oder 8, wenn diese von einem der Ansprüche 4 bis 6 abhängen, wobei das Antriebssystem so eingerichtet ist, dass,
wenn die Wechselstromseite des ersten Stromwandlungsgeräts von der zweiten Wechselstromversorgung auf die erste Wechselstromversorgung umgeschaltet wird, die Antriebsmaschine in einen Leerlaufzustand geschaltet wird, nachdem der vierte Schritt ausgeführt worden ist.

## Revendications

1. Véhicule ferroviaire destiné à circuler sur un itinéraire disposant d'une ligne de contact aérienne et sur un itinéraire dépourvu de ligne de contact aérienne, le véhicule étant équipé d'un système d'entraînement comprenant :
un premier dispositif de conversion de puissance (21, 22 ; 21, 23 ; 21, 24) qui convertit une puissance en courant alternatif en une puissance en courant continu ; et
un second dispositif de conversion de puissance (4) qui entraîne un moteur électrique (5) en utilisant la puissance en courant continu convertie par le premier dispositif de conversion de puissance en tant qu'une source d'alimentation, dans lequel :
le premier dispositif de conversion de puissance est connecté, par l'intermédiaire d'un premier contacteur (12 ; 14), à une première alimentation en courant alternatif qui fournit un courant alternatif monophasé, et est connecté, par l'intermédiaire d'un deuxième contacteur (13), à une seconde alimentation en courant alternatif (6) qui fournit un courant alternatif triphasé ;
le premier dispositif de conversion de puissance met en oeuvre une opération de conversion de puissance selon les alimentations en courant alternatif connectées aux premier et deuxième contacteurs ;
un collecteur de puissance (1) qui collecte la puissance en courant alternatif en provenance de la première alimentation en courant alternatif ; et
un transformateur (11) connecté au collecteur de puissance par l'intermédiaire d'un troisième contacteur (15, 16) sur un côté de fil primaire, et connecté au premier dispositif de conversion de puissance par l'intermédiaire du premier contacteur sur un côté de fil secondaire, le transformateur réduisant progressivement la puissance en courant alternatif provenant de la première alimentation en courant alternatif pour fournir la puissance en courant alternatif au premier dispositif de conversion de puissance, dans lequel :
le système d'entraînement est configuré, lorsqu'un côté de courant alternatif du premier dispositif de conversion de puissance est commuté de la première alimentation en courant alternatif à la seconde alimentation en courant alternatif, de manière à mettre en oeuvre, dans l'ordre séquentiel :
une première étape consistant à mettre fin à une opération de commutation du premier dispositif de conversion de puissance afin d'ouvrir le premier contacteur ;
une deuxième étape consistant à fermer le deuxième contacteur pour démarrer une opération de commutation consistant à convertir le courant alternatif triphasé en un courant continu, par le biais du premier dispositif de conversion de puissance ;
une troisième étape consistant à autoriser un couple fourni en sortie à partir du moteur électrique ; et
une opération d'ouverture du troisième contacteur est mise en oeuvre parallèlement aux première et deuxième étapes ;
la troisième étape est mise en oeuvre à condition que la deuxième étape et l'ouverture du troisième contacteur soient terminées.

2. Véhicule ferroviaire selon la revendication 1, dans lequel :
le collecteur de puissance peut être déplacé vers une position de stockage après l'ouverture du troisième contacteur.

3. Véhicule ferroviaire selon la revendication 1 ou 2, dans lequel le système d'entraînement comprend en outre
une alimentation électrique auxiliaire (APS) qui alimente un appareil auxiliaire dans un véhicule en utilisant la puissance en courant continu, fournie en sortie à partir du premier dispositif de conversion de puissance, en tant que source d'alimentation, dans lequel :
le système d'entraînement est configuré de sorte que, lorsque le côté de courant alternatif du premier dispositif de conversion de puissance est commuté de la première alimentation en courant alternatif à la seconde alimentation en courant alternatif :
une étape de commutation de terminaison de l'alimentation électrique auxiliaire est mise en oeuvre parallèlement aux première et deuxième étapes.

4. Véhicule ferroviaire selon l'une quelconque des revendications 1 à 3, dans lequel le système d'entraînement est en outre configuré, lorsque le côté de courant alternatif du premier dispositif de conversion de puissance est commuté de la seconde alimentation en courant alternatif à la première alimentation en courant alternatif, de manière à mettre en oeuvre, dans l'ordre séquentiel :
une quatrième étape consistant à mettre fin à l'opération de commutation du premier dispositif de conversion de puissance afin d'ouvrir le deuxième contacteur ;
une cinquième étape consistant à fermer le premier contacteur pour démarrer une opération de commutation consistant à convertir le courant alternatif monophasé en courant continu par le biais du premier dispositif de conversion de puissance ; et
une sixième étape consistant à autoriser un couple fourni en sortie à partir du moteur électrique.

5. Véhicule ferroviaire selon la revendication 4, dans lequel :
le système d'entraînement est configuré de sorte que, lorsque le côté de courant alternatif du premier dispositif de conversion de puissance est commuté de la seconde alimentation en courant alternatif à la première alimentation en courant alternatif :
la quatrième étape est mise en oeuvre parallèlement à une opération consistant à fermer le troisième contacteur, la cinquième étape est mise en oeuvre à condition que la quatrième étape et l'opération de fermeture du troisième contacteur soient terminées ; et
la sixième étape est mise en oeuvre à condition que la cinquième étape soit terminée.

6. Véhicule ferroviaire selon la revendication 4 ou 5, dans lequel le système d'entraînement comprend en outre :
une alimentation électrique auxiliaire (APS) qui utilise, en tant qu'alimentation électrique, la puissance en courant continu fournie en sortie à partir du premier dispositif de conversion de puissance, en vue d'alimenter un appareil auxiliaire dans un véhicule, dans lequel :
le système d'entraînement est configuré de sorte que, lorsque le côté de courant alternatif du premier dispositif de conversion de puissance est commuté de la seconde alimentation en courant alternatif à la première alimentation en courant alternatif :
une étape de commutation de terminaison de l'alimentation électrique auxiliaire est mise en oeuvre parallèlement aux première et deuxième étapes.

7. Véhicule ferroviaire selon l'une quelconque des revendications 1 à 6, dans lequel le système d'entraînement comprend en outre un moteur.

8. Véhicule ferroviaire selon la revendication 7, dans lequel le système d'entraînement comprend en outre un générateur de puissance (G) actionné par le moteur, le générateur de puissance fournissant le courant alternatif triphasé de la seconde alimentation en courant alternatif.

9. Véhicule ferroviaire selon la revendication 7 ou 8, lorsqu'elle dépend de la revendication 4, dans lequel le système d'entraînement est configuré de sorte que :
lorsque le côté de courant alternatif du premier dispositif de conversion de puissance est commuté de la seconde alimentation en courant alternatif à la première alimentation en courant alternatif, il est mis fin au fonctionnement du moteur après la mise en oeuvre de la cinquième étape.

10. Véhicule ferroviaire selon la revendication 9, dans lequel le système d'entraînement est configuré de sorte que :
lorsque le côté de courant alternatif du premier dispositif de conversion de puissance est commuté de la seconde alimentation en courant alternatif à la première alimentation en courant alternatif, le moteur est commuté vers un état de ralenti après la mise en oeuvre de la quatrième étape.

11. Véhicule ferroviaire selon la revendication 7 ou 8, lorsqu'elle dépend de l'une quelconque des revendications 4 à 6, dans lequel le système d'entraînement est configuré de sorte que :
lorsque le côté de courant alternatif du premier dispositif de conversion de puissance est commuté de la seconde alimentation en courant alternatif à la première alimentation en courant alternatif, le moteur est commuté vers un état de ralenti après la mise en oeuvre de la quatrième étape.
